Europäisches Patentamt

European Patent Office

Office européen des brevets

(19)

(11) Publication number: 0 109 672
A2

# (12) EUROPEAN PATENT APPLICATION

(21) Application number: 83111539.9

(22) Date of filing: 18.11.83

(51) Int. Cl.³: A 21 C 15/00
A 23 G 3/20

(30) Priority: 22.11.82 NO 823895

(43) Date of publication of application:
30.05.84 Bulletin 84/22

(84) Designated Contracting States:
AT CH DE FR GB IT LI NL SE

(71) Applicant: Nidar-Bergene A/S
Bromstadveien 2
N-7000 Trondheim(NO)

(72) Inventor: Kvinnesland, Audun
Vetle Vislies vei 16
N-7000 Trondheim(NO)

(72) Inventor: Vikestad, Inge O.
Pinebergveien 8
N-7000 Trondheim(NO)

(74) Representative: Bjerkén, Jarl Hakan
c/o Gävle Patentbyra AB Box 304
S-801 04 Gävle 1(SE)

(54) A method and a device for preparation of plates, bars or figures of solid sugarbased edible substances.

(57) In a method for preparation of plates, bars or figures of solid, sugarbased edible substances, particularly brittle, a granular solid substance is deposited in a layer on a carrying sheet of an edible substance, such as a wafer biscuit. The layer deposited is then heated to the melting range of the substance. The granular layer thus will melt and further turn into a layer (14) of a solid substance adhering to the carrying sheet. A device for carrying out this method may comprise a depositor for sprinkling granular brittle substance over one or more pieces of carrying sheet placed on a conveyor belt passing the depositor, and a heat radiator arranged over the conveyor belt downstream relative to the depositor.

Fig. 2

EP 0 109 672 A2

A method and a device for preparation of plates, bars or figures of solid sugarbased edible substances.

This invention relates to a method and a device for preparation of plates, bars, or figures of solid, sugarbased edible substances, particularly brittle or similar breakable candy.

It is previously known to prepare a layer of such a substance by depositing it in molten state on a movable steelband or similar, by means of an extruder or a roller device. The shaping of such a layer with a controlled thickness and consistency and the partition of the hardening substance have created control problems. Further, this method demands expensive equipment, which is a bar to an economical utilization in small scale production.

The main object of the invention is to create a method and a device reducing the operation problems, wherein the device is constructed of simpler and less costly components than prior known equipment. It is further an important object to develop a method leaving most freedom in the design of the final product.

According to the invention this may be achieved by conducting the method as stated in patent claim 1.

This method enables an accurate control of the thickness of the final layer of brittle and control of the quality of this layer. The method is particularly advantageous when partitioning the carrying sheet into suitable pieces before depositing the substance. This renders the problematic cutting of sticky or hardened substance as well as the temperature control of the substance superfluous. The method will easily enable the preparation of brittle sheets with different shapes, e.g. with particular design.

To conduct this method, it is proposed to utilize a device as described in patent claim 2. The components used in this device are relatively simple and free of maintenance and the cost for equipment is substantially reduced, compared to the equipment which has been necessary for conducting comparable known methods.

The invention will be further described with reference to the drawing, wherein:

Figs 1 and 2 show a vertical section through a carrying sheet with brittle substance deposited thereon, respectively before and after the heat treatment according to the invention, while,

fig 3 shows a schematical perspective view of a device for conducting the method according to the invention.

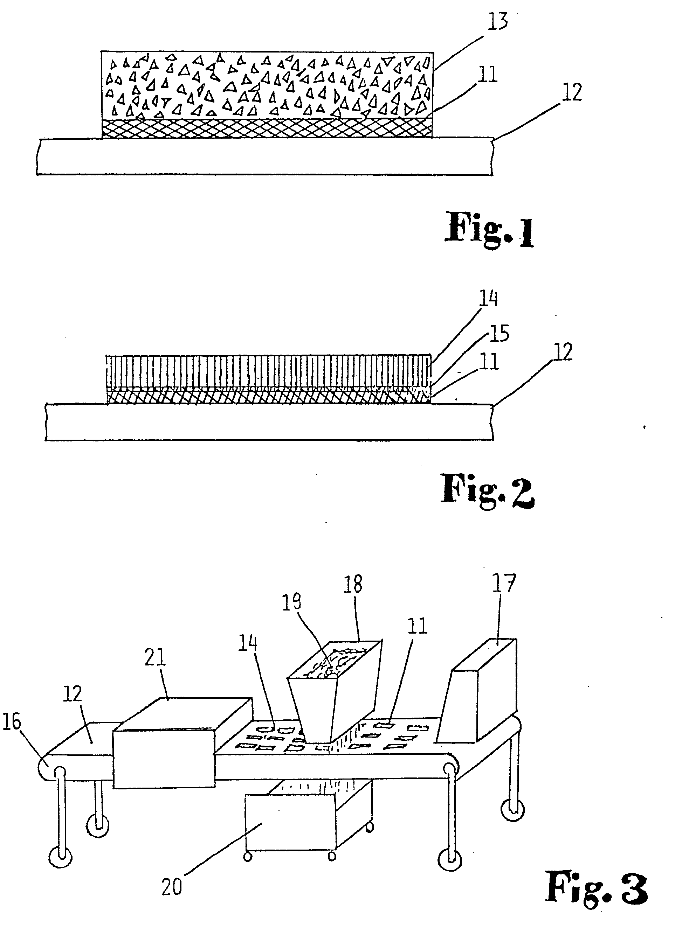

In fig 1, there is on a conveyor belt 12 placed a piece of wafer bisquit 11 which is covered with a layer 13 of particles or granules of a meltable substance, particularly brittle. The layer 13 may have a deliberately chosen suitable thickness and the size of the particles or the granules may vary or be inhomogeneous.

In fig 2 the layer structure of fig 1 is shown after a heat treatment, which has resulted in melting of the layer 13. The layer of particles has melted to a mainly homogeneous coating or layer 14, and simultaneously this layer has adhered to the upper porous layer 15 of the wafer sheet 11. The wafer sheet 11 and the cover layer 14 thus form a homogeneous integrated piece, which may be the final product or may be handled further in different ways to be used, e.g. in a chocolate product. It is particularly of interest to have the product covered by a layer of chocolate in a manner known per se.

In fig 3 it is shown an example of equipment for conducting the method. The conveyor belt 12 is carried on a stand 16 with a motor and a suitable control equipment not shown. The stand 16 may suitably be designed as a roller table, which may be easily moved between different lines of manufacturing.

At the inlet end of the conveyor belt 12, a wafer bisquit depositor 17 is arranged. This is charged with wafer sheets or pieces 11, which are cut into a suitable size and which are deposited with a certain mutual distance in the transverse and longitudinal directions on the conveyor belt 12.

After the depositor 17, a further depositor 18, charged with ground or crushed additive 19 is arranged over the conveyor belt. The substance 19, which below is called granular substance, may be different meltable sugar containing substances, with additives, e.g. brittle, for instance with almond, or other meltable and hardening substances being used for the preparation of candy products. The granular substance 19 may have a consistency in a broad range from powder to coarse particles, and may be prepared by a suitable grinder or a crusher.

The deposition of the granular substance on the wafer sheets 11 may be controlled by controlling the speed of the conveyor belt 12 or by controlling the outlet opening of the depositor 18. The control equipment for both these devices may be of a kind known per se, and will not be further described.

It is advantageous to use a perforated conveyor belt 12 allowing superfluous granular substance 19 to pass down into a collector bin 20 arranged below the conveyor belt. The substance collected in the bin 20 may without further treatment be recirculated to the depositor 18.

As a further control of the thickness of the granular layer 13 (fig 1), a wiper or a doctor blade (not shown) may be arranged downstream relative to the depositor 18. This blade may be adjustable to leave a layer of a predetermined thickness on the wafer sheet 11.

Downstream relative to the depositor 18 it is further arranged an infra-heater 21 above the conveyor belt 12. This is sized and supplied with electric power which in relation to the chosen speed of the conveyor belt provides a sufficient melting and sintering of the granular

4

layer 13 to an amalgamated layer 14 (fig 2), which after cooling remains as a solid layer on the wafer bisquit sheet 11.

On using a brittle, a granular layer 13 with a thickness of approximately 1/3 inch may be deposited. After the amalgamation this is turned into a solid, mainly homogeneous cover layer with a thickness of approximately 1/8 inch.

As alternative to bisquit sheets, other kinds of thin, edible sheets may be used.

The heat-treatment of the granular layer 13 under the heater 21 may give a complete melting and amalgamation of particles to prepare a homogeneous substance. The treatment may however be limited to a partial amalgamation, to prepare a continuous and solid, but nevertheless porous and partly grainy substance. In this way, a product which is novel both in preparation and consistency may be prepared.

5

## Claims

1. Method for preparation of sheets, bars or figures of solid sugarbased edible substances based on a granular substance, particularly brittle, c h a r a c t e r i z e d in that a granular solid substance is deposited in a layer (13) on a carrying sheet (11) of an edible substance, such as a wafer bisquit, and that the granular layer deposited then is heated with a radiation heater (21) arranged over a conveyor belt (12) for the carrying sheet (11) up to a temperature in the melting range of the substance.

2. Device for conducting the method according to claim 1, with a depositor (18) which is provided to sprinkle granular brittle substance over an edible substance which is carried on a conveyor belt (12) passing the depositor, c h a r a c t e r i z e d in that it comprises a heat radiator (21) arranged over the conveyor belt downstream relative to the depositor.

1/1

**Fig. 1**

**Fig. 2**

**Fig. 3**